# EUROPÄISCHE PATENTSCHRIFT

(11) **EP 0 442 581 B1**
(45) Veröffentlichungstag und Bekanntmachung des Hinweises auf die Patenterteilung: **09.07.1997**
(21) Anmeldenummer: 91200296.1
(22) Anmeldetag: 13.02.1991
(51) Int. Cl.: H04L 12/56

(54) **Asynchrones Zeitvielfachübermittlungssystem**
Asynchronous time division multiplex communication system
Système de communication asynchrone à division temporelle

(30) Priorität: 16.02.1990 DE 4004889
(43) Veröffentlichungstag der Anmeldung: 21.08.1991
(73) Patentinhaber: Philips Patentverwaltung GmbH, 22335 Hamburg (DE); Philips Electronics N.V., 5621 BA Eindhoven (NL)
(72) Erfinder: Mertelmeier, Christine, Dipl.-Math., W-8520 Erlangen (DE); Wölker, Roland, Dr. rer. nat., W-8520 Erlangen (DE)
(74) Vertreter: Peuckert, Hermann, Dipl.-Ing.

(56) Entgegenhaltungen:
- EP-A- 0 322 075
- IEEE JOURNAL ON SELECTED AREAS IN COMMUNICATIONS Bd. 6, Nr. 9, Dezember 1988, NEW YORK, US Seiten 1528 - 1537; M. DEVAULT ET AL: 'THE PRELUDE ATD EXPERIMENT: ASSESSMENTS AND FUTURE PROSPECTS'

## Beschreibung

Die Erfindung bezieht sich auf ein asynchrones Zeitvielfachübermittlungssystem, und ein Koppelelement gemäß Oberbegriff der Ansprüche 1 und 7.

Bei dem asynchronen Zeitvielfachübermittlungssystem werden Nutzinformationen, z.B. Fernsprech-, Bild- oder Tonsignale, in Blöcken fester Länge gesendet. Als ein Block fester Länge wird eine Zelle bezeichnet, die eine vorbestimmte Anzahl von Bits in serieller Reihenfolge aufweist. Jede Zelle besteht aus einem Kopf- und einem Informationsfeld. In dem Kopffeld ist u.a. die Wegekennung für die Zelle untergebracht. Unter einer Wegekennung ist eine Verbindungskennung oder eine Wegelenkungsinformation zu verstehen. In der Verbindungskennung ist die Angabe über das Ziel bzw. Teilziel der Nutzinformation enthalten. Die Wegelenkungsinformation wird innerhalb des Systems in bestimmten Übermittlungsanordnungen hinzugefügt und enthält eine Angabe über ein Teilziel innerhalb der Übermittlungsanordnung. Die Nutzinformation ist im Informationsfeld untergebracht.

Zellen sind aufeinanderfolgend bestimmten Zeitabschnitten (Zeitrahmen) zugeordnet. Die Dauer eines solche Zeitabschnittes hängt von der zugrundegelegten Taktfrequenz der Übermittlungskomponente ab. Falls keine Nutzinformation vorhanden ist, werden in einem solchen Zeitrahmen Leerzellen übertragen, d.h. Zellen ohne Nutzinformation. Zellen, die eine Nutzinformation beinhalten, werden als Nutzzellen bezeichnet.

Bei der Übertragung der Zellen zwischen Teilnehmern durchlaufen die Zellen Koppelfelder, in denen Wege durch Auswertung der Wegekennung hergestellt werden. Ein solches Koppelfeld kann sich dabei aus mehreren Koppelfeldblöcken zusammensetzen. Ein solcher Koppelfeldblock mit mehreren Zubringer- und Abnehmerleitungen besteht aus mehreren Koppelelementen. Ein Koppelelement enthält mehrere Zubringerleitungen und eine Abnehmerleitung. In einem Koppelelement werden dabei Zellen von einer Zubringerleitung auf eine Abnehmerleitung gegeben. Bei Eintreffen von Zellen auf mehreren Zubringerleitungen während eines Zeitrahmens, die auf eine Abnehmerleitung zugreifen wollen, sind besondere Strategien zur Kopplung notwendig.

Aus der DE-A-37 14 385 ist das oben genannte Koppelelement bekannt. Hierbei werden die auf Zubringerleitungen eintreffenden Zellen in jeweils einem Eingangspuffer gespeichert. Nach Auswertung der Wegekennung in einem jeder Zubringerleitung zugeordnetem Vergleicher wird bei Übereinstimmung der Wegekennung mit der Adresse einer Abnehmerleitung die Abnehmerleitung für die Zelle im Eingangspuffer freigegeben. Sind gleichzeitig verschiedene Zellen, die in den den Zubringerleitungen zugeordneten Eingangspuffern gespeichert sind, für eine Abnehmerleitung vorgesehen, so wird von einer Entscheiderschaltung zyklisch jeder einem Eingangspuffer oder einer Zubringerleitung zugeordnete Vergleicher zur Ausgabe der Zellen aus dem jeweiligen Eingangspuffer freigegeben. Aufwendig bei diesem Koppelelement ist, daß jeder Zubringerleitung ein Vergleicher zugeordnet ist.

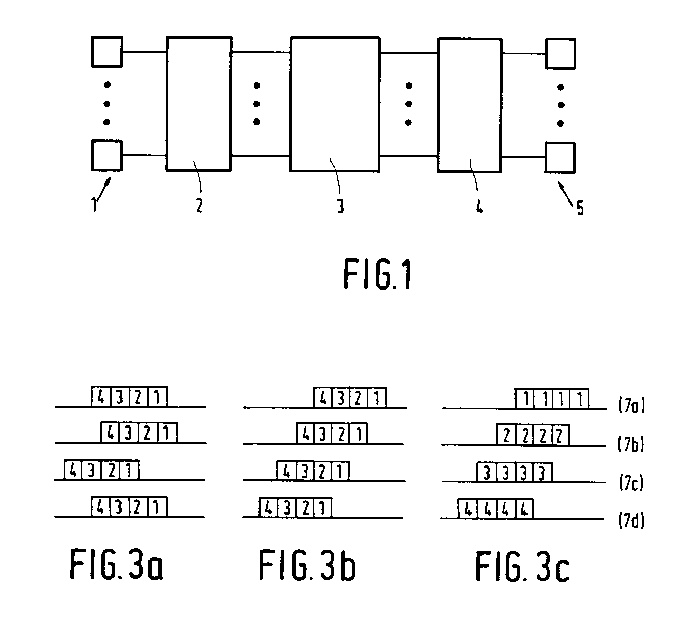

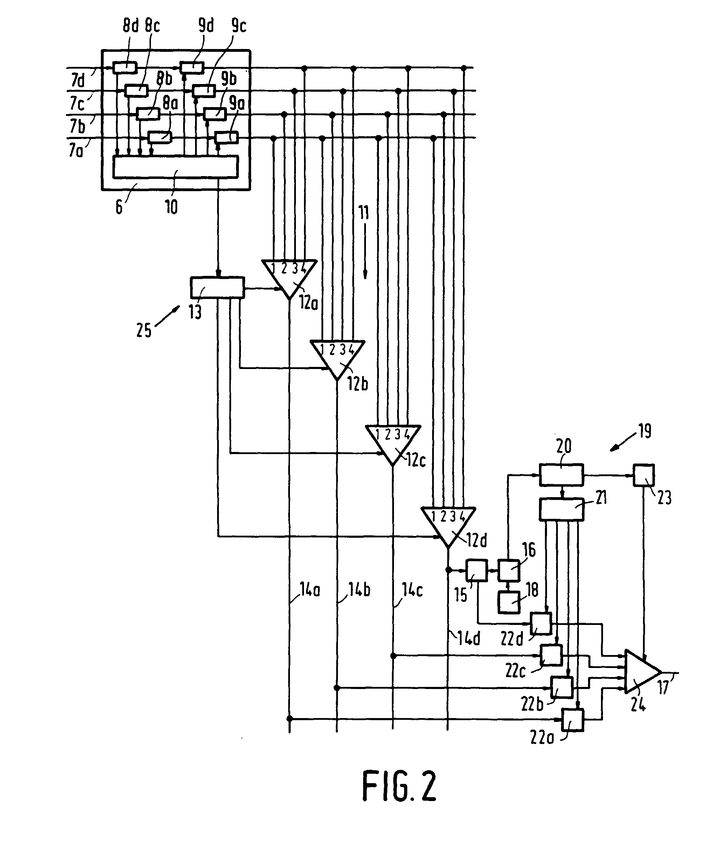

Aus der Schrift EP-A-0 322 075 ist ein Koppelfeld und Koppelfeldsteuerung für ein Vermittlungssystem bekannt, bei dem für jede Zubringerleitung ein Eingangspuffer und ein Vergleicher für die Zuordnung der in den Zellen enthaltenen Wegekennung zu einer Abnehmerleitung erforderlich ist (vgl. Fig. 1 und Seite 3).

Aus der Schrift IEEE Journal on Selected Areas in Communications, Bd. 6, Nr. 9, Dezember 1988, New York, US, Seiten 1528- 1537, M. Devault et. al.: "The Prelude ATD Experiment: Assessments and Future Prospects" ist ein asynchrones Zeitvielfachübermittlungssystem mit einem Koppelelement bekannt, das die auf den Zubringerleitungen zugeführten Zellen mit einem gemeinsamen Takt versieht (Taktanpassung) und die Zellen auf den verschiedenen Zubringerleitungen um jeweils eine Wortlänge versetzt. In einem Multiplexersystem (supermultiplexing) werden die Zellen derart umgeordnet, daß alle parallelen Worte der auf den Zubringerleitungen ankommenden Zellen, die relativ zum Kopffeld an der gleichen Stelle stehen, einer Ausgangsleitung zugeordnet werden. Die Anzahl der Ausgangsleitungen entspricht der Anzahl der Worte in den Zellen. Die entstandenen neuen Zellen werden zeilenweise zyklisch in einen Speicher geschrieben. Dabei wird im ersten Zyklus die Adresse des ersten Wortes (Kopffeld) in ein Adressregister geschrieben, das zu der ersten Zeile einer zeilenweise organisierten Zentralpufferung gehört. In den folgenden Zyklen wird diese Adresse jeweils inkrementiert und so die Speicherzeilen mit jeweils einem Wort der Zellen beschrieben. Weiter ist noch ein Vergleicher erforderlich, der einerseits mit dem Adressregister der ersten Speicherzeile und andererseits mit einer Entscheiderschaltung verbunden ist, die bei Zuordnung zu einer der Abnehmerleitungen die Ausgänge der Speicher mit der jeweiligen Leitung verbindet. Dabei wird entsprechend der ausgewählten Abnehmerleitung die Adresse des Kopffeldes zusammen mit einer Zykluskennung im Adressregister eingestellt und in den folgenden Zyklen der Speicher so ausgelesen, daß die Zelle in ihrer ursprünglichen Form auf die entsprechende Abnehmerleitung geschaltet wird. Bei diesem Verfahren werden die zugeführten Zellen in jedem Fall zentral gepuffert, bevor ein Vergleicher anhand der Wegekennung die Zelle der aufgerufenen Abnehmerleitung zuordnet. Es kann zu Zellverlusten in Folge von Spitzenlasten auf Ausgängen kommen, die mit weniger Last belegt sind. Weiterhin ist das Ausleseverfahren der zyklisch beschriebenen Speicher mittels einer aus Kopffeldadresse und Zykluskennung zusammengesetzten Speicheradressierung kompliziert.

Der Erfindung liegt daher die Aufgabe zugrunde, ein Koppelelement für ein asynchrones Zeitvielfachübermittlungssystem zu schaffen, das mit geringerem Schaltungsaufwand realisiert ist.

Diese Aufgabe wird mit den Merkmalen des kennzeichnenden Teils der Ansprüche 1 bzw. 7 gelöst.

Bei diesem Koppelelement werden die Zellen, die auf verschiedenen Zubringerleitungen zugeführt werden, in einer Umordnungsschaltung so aufbereitet, daß zumindest die Wegekennung der verschiedenen Zellen eines Zeitrahmens in einen Zwischenblock gegeben werden. Es ist auch möglich, noch weitere Zwischenblöcke mit den Wegekennungen zu bilden. Des weiteren können den Zwischenblöcken mit der Wegekennung auch Nutzinformationen der Zellen dazugegeben werden. Die restlichen Nutzinformationen der Zellen werden in weiteren Zwischenblöcken organisiert, die auf weitere Zwischenleitungen gegeben werden. Durch diese Umverteilung müssen nur noch die Zwischenleitungen, auf denen die Zwischenblöcke mit den Wegekennungen transportiert werden, mit jeweils einem Vergleicher verbunden werden. Aufgrund dieser Maßnahme wird die Anzahl der Vergleicher in einem solchen Koppelelement reduziert. Es ist nicht mehr erforderlich, für jede Zubringerleitung einen Vergleicher vorzusehen, wodurch der Aufwand bei der Realisierung gegenüber dem bekannten Koppelelement verringert wird. Bei dem erfindungsgemäßen Koppelelement ist beispielsweise nur ein Vergleicher erforderlich, wenn die Wegekennung über Zwischenblöcke einer Zwischenleitung gegeben wird. Hat der Vergleicher festgestellt, daß die Wegekennung der Abnehmerleitung zugeordnet ist, d.h., daß die zugehörige Zelle dieser Abnehmerleitung zugeführt werden soll, wird die Wegekennung der Zelle und die restlichen Daten in Puffer eingelesen, die mit den verschiedenen Zwischenleitungen verbunden sind. Die in den Puffern gespeicherten Daten werden mittels eines Multiplexers auf die Abnehmerleitung gegeben. Hierbei wird die Zelle wieder so zusammengesetzt, wie sie auf einer Zubringerleitung zugeführt worden ist. Eine Leerzelle, die vom Vergleicher detektiert worden ist, wird nicht in die Puffer eingelesen. Des weiteren werden die Zellen nach ihrem zeitlichen Eintreffen durchgeschaltet, d.h. es werden alle Zellen eines Zeitrahmens auf eine Abnehmerleitung gegeben, bevor die Zellen des nächsten Zeitrahmens auf eine Abnehmerleitung geleitet werden.

In einer Weiterbildung der Erfindung ist vorgesehen, daß in der Umordnungsschaltung aus den auf den Zubringerleitungen zugeführten Zellen, die jeweils in Worte gleichlanger Zeitabschnitte eingeteilt sind und deren jeweilige Wortanzahl der Anzahl der Zubringerleitungen entspricht, Zwischenblöcke gebildet werden, die sich aus den Worten zusammensetzen, welche in den jeweiligen Zellen an denselben Zeitabschnitten vorhanden sind. Bei dieser Weiterbildung werden auf den Zwischenleitungen Zwischenblöcke gebildet, die aus den Worten der verschiedenen Zellen zusammengesetzt sind und deren Wortanzahl der Wortanzahl einer Zelle entspricht. Voraussetzung dafür ist, daß die Anzahl der Zwischenleitungen der Anzahl der Zubringerleitungen entspricht. Durch diese Maßnahme werden die Puffer gleichmaßig belegt und somit optimal ausgenutzt. Die Zwischenblöcke können hierbei gleichzeitig oder mit einer gewissen Verzögerung zueinander auf die Zwischenleitungen gegeben werden. Da die Puffer nicht wie in dem bekannten Koppelelement an den Zubringerleitungen untergebracht sind, ist eine kleinere Dimensionierung der Puffer möglich. Die Zellen werden bei der Erfindung nämlich gleichmäßig auf die Puffer verteilt und es kann nicht wie bei dem bekannten Koppelelement vorkommen, daß in einem Puffer mehr Zellen gespeichert sind als in einem anderen, weil auf einer Zubringerleitung während einer Periode mehr Zellen eintreffen als auf einer anderen Zubringerleitung.

Um den Aufwand für das Koppelelement so gering wie möglich zu halten, ist vorgesehen, daß die Umordnungsschaltung das erste Wort einer Zelle mit der Wegekennung bildet und daß der Vergleicher, mit der das erste Wort der Zellen übertragenden Zwischenleitung gekoppelt ist. Da die Wegekennung nur im ersten Wort einer Zelle vorhanden ist und die ersten Worte ausschließlich über eine Zwischenleitung gegeben werden, ist auch nur ein Vergleicher für ein Koppelelement erforderlich.

Die Umordnungsschaltung kann auf einfache Art realisiert werden, wenn diese die Zwischenblöcke zueinander jeweils so um den Zeitabschnitt eines Wortes versetzt, daß die zeitliche Reihenfolge der Zwischenblöcke der zeitlichen Reihenfolge der Worte in einer Zelle entspricht. Hierzu enthält die Umordnungsschaltung eine Synchronisationsschaltung, welche die auf den Zubringerleitungen zugeführten Zellen zueinander jeweils um den Zeitabschnitt eines Wortes versetzt und weiter eine von einer Eingangssteuerschaltung gesteuerte Multiplexeranordnung, die die Zwischenblöcke aus den um jeweils den Zeitabschnitt eines Wortes zueinander versetzten Zellen bildet. Die Synchronisationsschaltung muß dabei zuerst die während eines Zeitrahmens eintreffenden Zellen miteinander synchronisieren und dann die zeitliche Versetzung durchführen.

Die Umorganisation der Zellen in Zwischenblöcke wird in der Multiplexeranordnung realisiert. Diese führt die Umorganisation mittels Einzelmultiplexern durch, deren Ausgänge mit jeweils einer Zwischenleitung verbunden sind und deren Eingänge durch Steuerung der Eingangssteuerschaltung zyklisch mit jeweils einem Ausgang der Synchronisationsschaltung verbunden sind.

Ein Ausführungsbeispiel der Erfindung wird nachstehend anhand der Zeichnungen näher erläutert. Es zeigen:
Fig. 1 ein Blockschaltbild eines asynchronen Zeitvielfachübermittlungssystems,
Fig. 2 ein vereinfacht dargestelltes Koppelelement und
Fig. 3 ein Beispiel für die zeitliche Beziehung von auf den Leitungen nach Fig. 2 transportierten Wörtern und Zellen.

Mit dem in Fig. 1 dargestellten Blockschaltbild läßt sich das Prinzip eines asynchronen Zeitvielfachübermittlungssystems erläutern. Die Signale eines Endgerätes, z.B. Fernsprech-, Bild- oder Tonsignale, werden in einem Paketisierer segmentiert und mit einem Kopffeld, in dem eine Wegekennung vorhanden ist, versehen. Die Wegekennung beinhaltet die Angabe über das Ziel der Signale. Ein solches Endgerät und der Paketisierer bilden eine Teilnehmerendeinrichtung 1. Die Daten eines solchen Endgerätes werden dabei innerhalb eines Zeitintervalles (Zeitrahmen) in Form von Zellen übertragen. Die Dauer eines solchen Zeitrahmens hängt dabei von der zugrundegelegten Taktfrequenz einer Übermittlungskomponente ab. Solche Zellen bestehen aus dem schon oben erwähnten Kopffeld und der Nutzinformation. Sollen innerhalb eines Zeitrahmens keine Daten übertragen werden, so wird eine Leerzelle gebildet, d.h. eine Zelle, in der im Kopffeld angegeben ist, daß keine weitere Information folgt. Solche Leerzellen dienen zur Synchronisation des Systems. Die Zellen, die eine Nutzinformation tragen, werden als Nutzzellen bezeichnet.

In dem in Fig. 1 dargestellten Blockschaltbild werden die Daten z.B. von 64 Teilnehmerendeinrichtungen 1 über 64 Leitungen mit jeweils einer Kapazität von 150 Mbit/s zu einer Anschlußgruppe 2 übertragen. In der Anschlußgruppe 2 werden die Daten zusammengefaßt und über eine geringere Anzahl von Leitungen mit einer höheren Kapazität übertragen. Beispielsweise können diese Daten über 16 Leitungen mit einer Kapazität von jeweils 600 Mbit/s geführt werden. In einem nachfolgenden Koppelfeld 3, das sich aus mehreren Koppelfeldblöcken und diese aus mehreren Koppelelementen zusammensetzt, findet durch Auswertung der Wegekennung eine Vermittlung der Daten statt, indem sie auf eine bestimmte Abnehmerleitung gegeben werden. Ein Koppelelement besteht hierbei aus einer Schaltungsanordnung, die an mehrere Zubringerleitungen und eine Abnehmerleitung angeschlossen ist. Die Schaltungsanordnung bzw. das Koppelelement können Daten, die auf die mit dem Koppelelement verbundene Abnehmerleitung weitergeleitet werden sollen, ermitteln und die erforderlichen Weae innerhalb der Schaltungsanordnung dafür schaffen. Das Koppelfeld 3 ist wieder mit mehreren Leitungen, z.B. 16 Leitungen mit einer Kapazität von 600 Mbit/s mit einer Anschlußgruppe 4 verbunden. Die Anschlußgruppe 4 leitet die empfangenen Daten über Leitungen an Teilnehmerendeinrichtungen 5 weiter. Beispielsweise sind hierbei 64 Leitungen mit jeweils einer Kapazität von 150 Mbit/s vorgesehen. Ein solches System überträgt noch Daten von der Teilnehmerendeinrichtung 5 auf die Teilnehmerendeinrichtung 1.

In Fig. 2 ist ein Koppelelement, das Teil eines Koppelfeldes ist, dargestellt. Das Koppelelement enthält eine ordnungsschaltung 25 mit einer Synchronisationsschaltung 6, die mit vier Zubringerleitungen 7a bis d verbunden ist. Auf den vier Zubringerleitungen 7a bis d werden Daten in Form von Zellen der Synchronisationsschaltung 6 zugeführt. Innerhalb eines bestimmten Zeitrahmens werden solche Zellen auf den Zubringerleitungen 7a bis d transportiert. Diese Zellen sind zueinander nicht synchronisiert, wie das in Fig. 3a dargestellt ist. Die Fig. 3a zeigt vier Zellen, die beispielsweise auf einer der Zubringerleitungen 7a bis d der Synchronisationsschaltung 6 zugeführt werden könnten. Diese Zellen sind in vier Worte 1 bis 4 eingeteilt. Die Worte weisen jeweils den gleichen zeitlichen Abstand auf (gleiche Anzahl von Bits). Da die einzelnen Zellen nicht miteinander zeitsynchronisiert sind, werden sie in der Synchronisationsschaltung 6 synchronisiert und zueinander jeweils um ein Wort versetzt, wie das in Fig. 3b dargestellt ist. Die Zelle auf der Leitung 7a ist um ein Wort gegenüber der Zelle auf der Leitung 7b zeitlich versetzt. Des weiteren ist die Zelle auf der Leitung 7b gegenüber der Zelle auf der Leitung 7c um ein Wort und die Zelle auf der Leitung 7c gegenüber der Zelle auf der Leitung 7d ebenfalls um ein Wort verschoben. Dabei wird die Zelle auf der Leitung 7a um den Zeitabstand dreier Worte eher aus der Synchronisationsschaltung 6 ausgelesen als die Zelle auf der Leitung 7d.

Eine solche Synchronisation und zeitliche Versetzung kann beispielsweise mittels Synchron-Detektionsschaltungen 8a bis d, vier Speichern 9a bis d und einer Synchronsteuerschaltung 10 realisiert werden. Die Synchron-Detektionsschaltungen 8a bis d detektieren einen Zellanfang und geben der Synchron-Steuerschaltung 10 eine entsprechende Information. Die Synchron-Steuerschaltung 10 gibt daraufhin einen Speicher 9a bis d frei, so daß eine Zelle in den Speicher eingelesen werden kann. Nachdem alle Zellen in die Speicher 9a bis d eingelesen worden sind, wird durch einen entsprechenden Befehl der Synchron-Steuerschaltung 10 die erste Zelle im Speicher 9d ausgelesen. Anschließend werden die restlichen Zellen aus den Speichern 9c bis a mit einer zeitlichen Verschiebung ausgelesen, wie das in der Fig. 3b dargestellt ist.

Es sei erwähnt, daß die in Fig. 2 dargestellten Leitungen aus Gründen der Übersichtlichkeit in Form einer Leitung gezeichnet sind, obwohl sie teilweise aus mehreren parallelen Leitungen bestehen. Auch die für die Steuerung der einzelnen digitalen Schaltungselemente erforderlichen Taktleitungen und Taktgeneratoren sind nicht dargestellt.

Die vier von der Synchronisationsschaltung 6 abgehenden Leitungen sind mit einer Multiplexeranordnung 11, die auch eine Schaltung der Umordnungsschaltung 25 ist, verbunden. Diese Multiplexeranordnung 11 enthält vier Einzelmultiplexer 12a bis d und eine Eingangssteuerschaltung 13. Die Einzelmultiplexer 12a bis d sind an ihrem jeweiligen Ausgang an jeweils eine Zwischenleitung 14a bis 14d angeschlossen. Mittels der Multiplexeranordnung werden die um ein Wort zueinander versetzten Zellen zu Zwischenblöcken umsortiert. In einem solchen Zwischenblock erscheinen die Worte einer Zelle, welche in den jeweiligen Zellen an denselben Zeitabschnitten auftreten, d.h. am Ausgang des Multiplexers 12d erscheint ein Zwischenblock mit dem ersten Wort einer jeden Zelle. An den Ausgängen der Einzelmultiplexer 12c bis a erscheinen dann die zweiten bis vierten Worte der Zellen. Die Zwischenblöcke, die auf den Leitungen 14a bis d auftreten, sind in Fig. 3c aufgezeichnet.

Die Steuerung der Einzelmultiplexer 12a bis d wird mittels der Eingangssteuerschaltung 13 realisiert, die z.B. aus einem Zähler bestehen kann. Die Eingangssteuerschaltung 13 enthält von der Synchronisationsschaltung 6 ein Freigabesignal, wenn aus den Speichern 9a bis 9d die Zellen ausgelesen werden. In diesem Fall werden von der Eingangssteuerschaltung 13 bestimmte Eingänge der Einzelmultiplexer 12a bis d für jeweils die Dauer des Zeitabstandes eines Wortes freigegeben. Diese Eingänge der Multiplexer sind in Fig. 2 mit Ziffern 1 bis 4 bezeichnet. Zuerst wird der Eingang 3 des Multiplexers 12a, der Eingang 2 des Multiplexers 12b, der Eingang 1 des Multiplexers 12c und der Eingang 4 des Multiplexers 12d freigegeben. Auf der Zwischenleitung 14d erscheint dann das erste Wort der Zelle aus dem Speicher 9d. Für die nächsten Worte wird der Eingang 2 des zelmultiplexers 12b, der Eingang 1 des Einzelmultiplexers 12b, der Eingang 4 des Einzelmultiplexers 12c und der Eingang 3 des Einzelmultiplexers 12d freigegeben. Auf der Leitung 14d erscheint dann das erste Wort der Zelle aus dem Speicher 9c und auf der Leitung 14c das zweite Wort der Zelle aus dem Speicher 9d. Beim nächsten Schaltvorgang ist der Eingang 1 des Einzelmultiplexers 12a, der Eingang 4 des Einzelmultiplexers 12b, der Eingang 3 des Einzelmultiplexers 12c und der Eingang 2 des Einzelmultiplexers 12d freigegeben. Der Schaltvorgang endet mit der Freigabe des Einganges 4 des Einzelmultiplexers 12a, des Eingangs 3 des Einzelmultiplexers 12b, des Eingangs 2 des Einzelmultiplexers 2 und des Eingangs 1 des Einzelmultiplexers 12d. Anschließend wiederholt sich dieser Zyklus von neuem bis alle Worte der in den Speichern 9a bis d gespeicherten Zellen auf den Leitungen 14a bis d ausgelesen sind.

Eine solche Umverteilung der Worte einer Zelle ist bei diesem Ausführungsbeispiel nur möglich, wenn die Zelle die gleiche Anzahl von Worten aufweist wie Zubringerleitungen vorhanden sind.

An die Zubringerleitung 14d ist ein Register 15 angeschlossen, in welches jeweils das erste Wort einer Zelle eingelesen wird. In dem ersten Wort muß auf jeden Fall die Wegekennung vorhanden sein. In einem Vergleicher 16, der mit dem Register 15 verbunden ist, wird die Wegekennung ausgewertet, die im ersten Wort einer Zelle vorhanden ist. Wird von dem Vergleicher 16 durch Auswertung der im Speicher 18 abgelegten Information festgestellt, daß die Zelle der Abnehmerleitung 17 zugeordnet ist, wird in einer Ausgangssteuerschaltung 19 ein Detektor 20 eine Freigabeschaltung 21 veranlassen, Puffer 22a bis d zur Einlesung der Worte einer Zelle freizugeben. Die Freigabeschaltung 21 gibt dabei die Puffer 22a bis d entsprechend dem Auftreten der Worte auf den Leitungen 14a bis d frei. Es wird also zuerst der Puffer 22d freigegeben, um das erste Wort einer Zelle aus dem Register 15 auszulesen. Nach der Dauer des Zeitabstandes eines Wortes wird der Puffer 22c freigegeben, um das zweite Wort der Zelle einzulesen. Gleichzeitig kann in den Puffer 22d schon das erste Wort der nächsten Zelle eingelesen werden. Ebenso wird mit der Freigabe der Puffer 22b und a verfahren. Die Puffer 22a bis d sind FIFO's. Die FIFO's sollten so dimensioniert sein, daß ein Überlauf praktisch nicht stattfinden kann. Die Speichergröße der FIFO's läßt sich durch Verkehrssimulationen des Koppelelementes ermitteln. Der Detektor 20 der Ausgangssteuerschaltung 19 gibt noch einen Zähler 23 frei, der einen Multiplexer 24 steuert. Der Multiplexer 24 verbindet einen seiner vier Eingänge mit der Abnehmerleitung 17. Der Multiplexer 24 wird dabei so gesteuert, daß eine Zelle beginnend mit dem ersten Wort und endend mit dem vierten Wort auf die Abnehmerleitung 17 gegeben wird.

Wenn eine Leerzelle auftritt, so wird der Vergleicher 16 feststellen, daß die Wegekennung der Leerzelle nicht der Abnehmerleitung 17 zugeordnet ist und eine Freigabe der Puffer 22a bis 22 d wird nicht stattfinden. Keine Leerzelle sondern nur eine Nutzzelle wird folglich auf die Abnehmerleitung 17 gegeben.

Bei dem aus Vereinfachungsgründen mit vier Zubringerleitungen dargestellten Koppelelement kann die Anzahl der Zubringerleitungen sehr viel größer sein. Bei diesem Ausführungsbeispiel müssen jedoch die Anzahl der Worte einer Zelle gleich der Anzahl der Zubringerleitungen gewählt werden.

## Patentansprüche

1. Asynchrones Zeitvielfachübermittlungssystem, das zur Übertragung von auf Zubringerleitungen (7a-d) ankommende Zellen mittels einer Auswertung der in den Zellen enthaltenen Wegekennung in einem Vergleicher (16) auf eine Abnehmerleitung (17) vorgesehen ist, mit mindestens einem Koppelelement mit einer Umordnungsschaltung (25), die zu einer solchen Umbildung der Zellen vorgesehen ist, daß zumindest in einem Zwischenblock die Wegekennung enthalten ist,
dadurch gekennzeichnet,
daß eine Ausgangssteuerschaltung (19) vorgesehen ist, die nur nach Feststellung der Zuordnung der Wegekennung zu einer Abnehmerleitung (17) in dem mit wenigstens einer Zwischenleitung gekoppelten Vergleicher (16) die Ausgangspuffer (22a-d) zum Einlesen der in den verschiedenen Zwischenblöcken enthaltenen Worte in der zeitlichen Reihenfolge ihres Eintreffens freigibt und
die Abnehmerleitung (17) mit den Ausgängen der Ausgangspuffer (22a-d) zum Auslesen einer Zelle in der Reihenfolge des Einlesens der Worte einer Zelle mittels eines zyklisch angesteuerten Multiplexers (24) verbindet.

2. Asynchrones Zeitvielfachübermittlungssystem nach Anspruch 1,
dadurch gekennzeichnet,
daß in der Umordnungsschaltung (25) aus den auf den Zubringerleitungen (7a-d) zugeführten Zellen, die jeweils in Worte gleichlanger Zeitabschnitte eingeteilt sind und deren jeweilige Wortanzahl der Anzahl der Zubringerleitungen entspricht, Zwischenblöcke gebildet werden, die sich aus den Worten zusammensetzen, welche in den jeweiligen Zellen an denselben Zeitabschnitten vorhanden sind.

3. Asynchrones Zeitvielfachübermittlungssystem nach Anspruch 2,
dadurch gekennzeichnet,
daß die Umordnungsschaltung (25) das erste Wort einer Zelle mit der Wegekennung bildet und daß der Vergleicher (16) mit der das erste Wort der Zellen übertragenden Zwischenleitung (14d) gekoppelt ist.

4. Asynchrones Zeitvielfachübermittlungssystem nach Anspruch 3,
dadurch gekennzeichnet,
daß die Umordnungsschaltung (25) die Zwischenblöcke außerdem zueinander jeweils so um den Zeitabschnitt eines Wortes versetzt, daß die zeitliche Reihenfolge der Zwischenblöcke der zeitlichen Reihenfolge der Worte in einer Zelle entspricht.

5. Asynchrones Zeitvielfachübermittlungssystem nach Anspruch 4,
dadurch gekennzeichnet,
daß die Umordnungsschaltung (25) eine Synchronisationsschaltung (6) enthält, die die auf den Zubringerleitungen (7a-d) zugeführten Zellen zueinander jeweils um eine Wortlänge versetzt, und daß eine von einer Eingangssteuerschaltung (13) gesteuerte Multiplexeranordnung (11) die Zwischenblöcke aus den jeweils um eine Wortlänge versetzten Zellen bildet.

6. Asynchrones Zeitvielfachübermittlungssystem nach Anspruch 5,
dadurch gekennzeichnet,
daß die Multiplexeranordnung (11) Einzelmultiplexer (12a-d) enthält, deren Ausgänge mit jeweils einer Zwischenleitung (14a-d) verbunden sind und deren Eingänge durch Steuerung der Eingangssteuerschaltung (13) zyklisch mit jeweils einem Ausgang der Synchronisationsschaltung (6) verbunden sind.

7. Koppelelement zur Benutzung in einem asychronen Zeitvielfachübermittlungssystem, das zur Übertragung von auf Zubringerleitungen (7a-d) ankommende Zellen mittels einer Auswertung der in den Zellen enthaltenen Wegekennung in einem Vergleicher (16) auf eine Abnehmerleitung (17) vorgesehen ist, mit mindestens einem Koppelelement mit einer Umordnungsschaltung (25), die zu einer solchen Umbildung der Zellen vorgesehen ist, daß zumindest in einem Zwischenblock die Wegekennung enthalten ist,
dadurch gekennzeichnet,
daß eine Ausgangssteuerschaltung (19) vorgesehen ist, die nur nach Feststellung der Zuordnung der Wegekennung zu einer Abnehmerleitung (17) in dem mit wenigstens einer Zwischenleitung gekoppelten Vergleicher (16) die Ausgangspuffer (22a-d) zum Einlesen der in den verschiedenen Zwischenblöcken enthaltenen Worte in der zeitlichen Reihenfolge ihres Eintreffens freigibt und
daß eine Ausgangssteuerschaltung (19) vorgesehen ist, welche die Abnehmerleitung (17) mit den Ausgängen der Ausgangspuffer (22a-d) zum Auslesen einer Zelle in der Reihenfolge des Einlesens der Worte einer Zelle mittels eines zyklisch angesteuerten Multiplexers (24) verbindet.

## Claims

1. An asynchronous time division multiplex communication system for transmitting cells coming in on input lines (7a-d) to an output line (17) via an evaluation in a comparator (16) of the path identification contained in the cells, comprising at least one switching element which includes a converter circuit (25) for converting the cells so that at least the path identification is positioned in one intermediate block, characterized in that an output control circuit (19) will not release the output buffers (22a-d) for entering the words contained in the various intermediate blocks in the chronological sequence in which they have arrived until after the control circuit (19) has established the assignment of the path identification to an output line (17) in the comparator coupled to at least one intermediate line, and in that the output line (17) is connected to the outputs of the output buffers (22a-d) for reading a cell in the order in which the words of a cell were entered by means of a cyclically controlled multiplexer (24).

2. An asynchronous time division multiplex communication system as claimed in Claim 1,
characterized in that in the converter circuit (25) from the cells which are conveyed on the input lines (7a-d), which cells are divided into words of equal time slots and whose respective number of words corresponds to the number of input lines, intermediate blocks are formed which are composed of the words available in the respective cells in the same time slots.

3. An asynchronous time division multiplex communication system as claimed in Claim 2,
characterized in that the converter circuit (25) forms the first word of a cell with the path identification and that the comparator (16) is coupled to the intermediate line (14d) which transmits the first word of the cells.

4. An asynchronous time division multiplex communication system as claimed in Claim 3,
characterized in that the converter circuit (25) shifts the intermediate blocks relative to each other by a word time slot so that the chronological order of the intermediate blocks corresponds to the chronological order of the words in a cell.

5. An asynchronous time division multiplex communication system as claimed in Claim 4, characterized in that the converter circuit (25) includes a synchronizing circuit (6) which shifts the cells applied via the input lines (7a-d) relative to each other by a respective word length, and in that a multiplexer arrangement (11) controlled by the input control circuit (13) forms the intermediate blocks from the cells which were shifted by a word length.

6. Asynchronous time division multiplex communication system as claimed in Claim 5, characterized in that the multiplexer arrangement (11) includes individual multiplexers (12a-d), whose outputs are connected to a respective intermediate line (14a-d) and whose inputs are cyclically connected to a respective input of the synchronizing circuit 6 under the control of the input control circuit (13).

7. Switching element to be used in an asynchronous time division multiplex communication system for transmitting cells coming in on input lines (7a-d) to an output line (17) via an evaluation in a comparator (16) of the path identification contained in the cells, comprising at least one switching element which includes a converter circuit (25) for converting the cells so that at least the path identification is positioned in one intermediate block, characterized in that an output control circuit (19) will not release the output buffers (22a-d) for entering the words contained in the various intermediate blocks in the chronological sequence in which they have arrived until after the control circuit (19) has established the assignment of the path identification to an output line (17) in the comparator coupled to at least one intermediate line, and in that an output control circuit (19) is provided which connects the output line (17) to the outputs of the output buffers (22a-d) for reading a cell in the order in which the words of a cell were entered by means of a cyclically controlled multiplexer (24).

## Revendications

1. Système de transmission multiplex asynchrone qui est prévu pour la transmission de cellules arrivant sur des lignes d'alimentation (7a-d) à l'aide d'une évaluation de l'identification de voie contenue dans les cellules dans un comparateur (16) sur une ligne de consommateur (17) avec au moins un élément de couplage doté d'un circuit de réarrangement (25) qui est prévu pour un réarrangement tel des cellules que l'identification de voie est contenue au moins dans un bloc intermédiaire,
caractérisé en ce
qu'il est prévu un circuit de commande de sortie (19) qui ne libère les tampons de sortie (22a-d) pour l'enregistrement des mots contenus dans les différents blocs intermédiaires dans la séquence temporelle de leur arrivée qu'après la constatation de l'affectation de l'identification de voie à une ligne de consommateur (17) dans le comparateur (16) couplé à une ligne intermédiaire au moins et
que la ligne de consommateur (17) est reliée aux sorties des tampons de sortie (22a-d) en vue de la lecture d'une cellule dans la séquence de l'enregistrement des mots d'une cellule à l'aide d'un multiplexeur (24) excité cycliquement.

2. Système de communication multiplex asynchrone selon la revendication 1,
caractérisé en ce
que des blocs intermédiaires qui se composent des mots présents dans les cellules respectives sur les mêmes segments temporels sont formés dans le circuit de réarrangement (25) à partir des cellules amenées aux lignes d'alimentation (7a-d) qui sont respectivement réparties en mots de segments temporels d'égale longueur et dont le nombre de mots respectifs correspond au nombre de lignes d'alimentation.

3. Système de communication multiplex asynchrone selon la revendication 2,
caractérisé en ce
que le circuit de réarrangement (25) forme le premier mot d'une cellule avec l'identification de voie et que le comparateur (16) est couplé à la ligne intermédiaire (14d) transmettant le premier mot des cellules.

4. Système de communication multiplex asynchrone selon la revendication 3,
caractérisé en ce
que le circuit de réarrangement (25) décale par ailleurs réciproquement les blocs intermédiaires respectivement du segment temporel d'un mot de telle sorte que la séquence temporelle des blocs intermédiaires corresponde à la séquence temporelle des mots dans une cellule.

5. Système de communication multiplex asynchrone selon la revendication 4,
caractérisé en ce
que le circuit de réarrangement (25) contient un circuit de synchronisation (6) qui décale réciproquement les cellules amenées sur les lignes d'alimentation (7a-d) respectivement d'une longueur de mot et qu'un dispositif de multiplexage (11) commandé par un circuit de commande d'entrée (13) forme les blocs intermédiaires à partir de cellules décalées respectivement d'une longueur de mot.

6. Système de communication multiplex asynchrone selon la revendication 5,
caractérisé en ce
que le dispositif de multiplexage (11) contient des multiplexeurs individuels (12a-d) dont les sorties sont respectivement reliées à une ligne intermédiaire (14a-d) et dont les entrées sont reliées cycliquement par commande du circuit de commande d'entrée 13 avec respectivement une sortie du circuit de synchronisation (6).

7. Elément de couplage en vue de son utilisation dans un système de communication multiplex asynchrone qui est prévu pour la transmission de cellules arrivant sur les lignes d'alimentation (7a-d) à l'aide d'une évaluation de l'identification de voie contenue dans les cellules dans un comparateur (16) sur une ligne de consommateur (17), avec au moins un élément de couplage doté d'un circuit de réarrangement (25) qui est prévu pour un réarrangement des cellules tel que l'identification de voie est contenue au moins dans un bloc intermédiaire,
caractérisé en ce
qu'il est prévu un circuit de commande de sortie (19) qui ne libère les tampons de sortie (22a-d) pour l'enregistrement des mots contenus dans les différents blocs intermédiaires dans la séquence temporelle de leur arrivée qu'après la constatation de l'affectation de l'identification de voie à une ligne de consommateur (17) dans le comparateur (16) couplé à une ligne intermédiaire au moins et
que la ligne de consommateur (17) est reliée aux sorties des tampons de sortie (22a-d) en vue de la lecture d'une cellule dans la séquence de l'enregistrement des mots d'une cellule à l'aide d'un multiplexeur (24) excité cycliquement.
